# EUROPEAN PATENT SPECIFICATION

(11) **EP 2 911 448 B1**
(45) Date of publication and mention of the grant of the patent: **22.11.2017**
(21) Application number: 15155782.4
(22) Date of filing: 19.02.2015
(51) Int. Cl.: H04W 36/00, H04W 52/02, H04W 84/12

(54) **Apparatus and method for controlling communication**
Vorrichtung und Verfahren zur Steuerung von Kommunikation
Appareil et procédé de commande de communication

(30) Priority: 21.02.2014 KR 20140020856
(43) Date of publication of application: 26.08.2015
(73) Proprietor: Samsung Electronics Co., Ltd., Gyeonggi-do 443-742 (KR)
(72) Inventor: Lee, You-Na, 443-742 Gyeonggi-do (KR); Choi, Yong-Hae, 443-742 Gyeonggi-do (KR)
(74) Representative: Nederlandsch Octrooibureau

(56) References cited:
- US-A1- 2006 109 825
- US-A1- 2009 103 503
- US-A1- 2010 232 389
- US-A1- 2012 163 345

## Description

### BACKGROUND OF THE INVENTION

### Field of the Invention

The present disclosure relates to an electronic device. More particularly, the present disclosure relates to an apparatus and a method for controlling communication.

### Description of the Related Art

Electronic devices may be connected to an external electronic device through various communication modules included therein, such as a wireless fidelity (WiFi) communication module, a Bluetooth (BT) communication module, and a Near Field Communication (NFC) module.

Among the above communication modules, the WiFi communication module may be connected to an access point (AP) provided by a service provider in a particular position or place to perform WiFi communication.

The document US 2012/0163345 A1 discloses that a mobile device primes itself for a handover if the mobile device experiences signal loss below a first threshold, and executes the handover if the signal loss drops below a second threshold.

The document US 2010/0232389 A1 discloses a handover mechanism based on an average value of the received signal strength RSSI.

### SUMMARY OF THE INVENTION

Aspects of the present disclosure are to address at least the above-mentioned problems and/or disadvantages and to provide at least the advantages described below. Accordingly, an aspect of the present disclosure is to provide an apparatus and method for a wireless fidelity (WiFi) communication connection state in which an electronic device is connected to a service provider in a particular position or place, when the electronic device moves and is apart from the access point (AP) by a predetermined distance, the electronic device may release the WiFi communication with the AP.

An operation for releasing the WiFi communication with the AP by the electronic device will be described. When the electronic device does not receive a beacon signal informing of the existence of the AP from the AP for a predetermined time or longer or for a predetermined number of times or more, the electronic device may release the WiFi communication with the AP.

However, as the electronic device moves away from the AP according to the movement of the electronic device, the WiFi communication may remain connected, but the communication state may be not good. Accordingly, the user may not perform communication for several seconds from a time point when a communication service is not possible to a time point when the generation of the beacon loss is determined to release the WiFi communication connection. According to an apparatus and a method for controlling communication according to various embodiments of the present disclosure, when the electronic device cannot use the communication service, the electronic device may rapidly release the connection and use other forms of communication.

In accordance with an aspect of the invention, an electronic device is provided according to claim 1. The electronic device includes a measurement module configured to measure received signal strength indications from a signal transmitted by an access device that the electronic device is connected to; a generation module configured to generate correction data by calculating an average of at least some of the received signal strength indications; and a control module configured to release the communication connection of the electronic device based on a change in the correction data, wherein the control module is further configured to detect the change in the correction data when the measured received signal strength indication is equal to or smaller than a first threshold; and to release the communication connection of the electronic device when the change in the correction data is larger than or equal to a second threshold. In accordance with another aspect of the invention, a method is provided according to claim 7. The method includes after connecting to an access device, measuring received signal strength indications from a signal transmitted by the access device; generating correction data by calculating an average of the received signal strength indications; and releasing the communication connection of an electronic device based on a change in the correction data, wherein the method further comprises comparing the measured received signal strength indication with a first threshold; detecting the change in the correction data when the measured received signal strength indication is equal to or smaller than the first threshold; comparing the change in the correction data with a second threshold; and releasing the communication connection of an electronic device with the access device when the change in the correction data is larger than or equal to the second threshold.

In accordance with another aspect of the invention, a non-transitory computer readable recording medium is provided according to claim 13, having recorded thereon a computer program for executing in a computer the method of claim 7.

An apparatus and a method for controlling communication according to various embodiments of the present disclosure can rapidly release connected communication by reducing the time for which the electronic device is communication connected in a state where the electronic device cannot use a communication service and can connect the electronic device to other communication.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to various embodiments of the present disclosure;
FIG. 2 is a block diagram illustrating a communication management device according to various embodiments of the present disclosure;
FIG. 3 is a flowchart illustrating a process of releasing a communication connection by an electronic device according to various embodiments of the present disclosure;
FIG. 4 is a graph describing a process of releasing a communication connection by an electronic device according to various embodiments of the present disclosure; and
FIG. 5 is a block diagram of an electronic device according to various embodiments of the present disclosure.

Throughout the drawings, it should be noted that like reference numbers are used to depict the same or similar elements, features, and structures.

### DETAILED DESCRIPTION OF THE EXEMPLARY EMBODIMENTS

The following description with reference to the accompanying drawings is provided to assist in a comprehensive understanding of various embodiments of the present disclosure as defined by the claims and their equivalents. It includes various specific details to assist in that understanding but these are to be regarded as merely exemplary.

An electronic device according to various embodiments of the present disclosure may be a device including a biometric function. For example, the electronic devices may include at least one of smart phones, tablet personal computers (PCs), mobile phones, video phones, e-book readers, desktop PCs, laptop PCs, netbook computers, personal digital assistants (PDAs), portable multimedia players (PMPs), digital audio players, mobile medical devices, cameras, wearable devices (e.g., head-mounted-devices (HMDs) such as electronic glasses), electronic clothes, electronic bracelets, electronic necklaces, electronic accessories, electronic tattoos, or smart watches.

According to some embodiments, the electronic device may be a smart home appliance with a communication function. The smart home appliances may include at least one of, for example, televisions, digital video disk (DVD) players, audio players, refrigerators, air conditioners, cleaners, ovens, microwaves, washing machines, air purifiers, set-top boxes, TV boxes (e.g., HomeSync™ of Samsung, Apple TV™, or Google TV™), game consoles, electronic dictionaries, electronic keys, camcorders, or electronic frames.

According to some embodiments, the electronic device may include at least one of various medical devices such as a magnetic resonance angiography (MRA) scanner, a magnetic resonance imaging (MRI) scanner, a computed tomography (CT) scanner, a scanner, an ultrasonograph, or the like, a navigation device, a global positioning system (GPS) receiver, an event data recorder (EDR), a flight data recorder (FDR), a vehicle infotainment device, an electronic equipment for ship (for example a ship navigation device and gyro-compass and the like, avionics, a security device, a head unit for vehicle, an industrial or household robot, an automatic teller machine in banking facilities or a point of sales (POS) system. According to some embodiments, the electronic device may include at least one of furniture or a part of a building/structure having a communication function, an electronic board, an electronic signature receiving device, a projector, or various measuring equipment (e.g., equipment for a water supply, an electricity, gases or radio waves). An electronic device according to various embodiments of the present disclosure may be a combination of one or more of above described various devices. Also, an electronic device according to various embodiments of the present disclosure may be a flexible device. Also, an electronic device according to various embodiments of the present disclosure is not limited to the above described devices.

Hereinafter, an electronic device according to various embodiments of the present disclosure will be described with reference to the accompanying drawings. In various embodiments, the term "user" may indicate a person using an electronic device or a device (e.g. an artificial intelligence electronic device) using an electronic device.

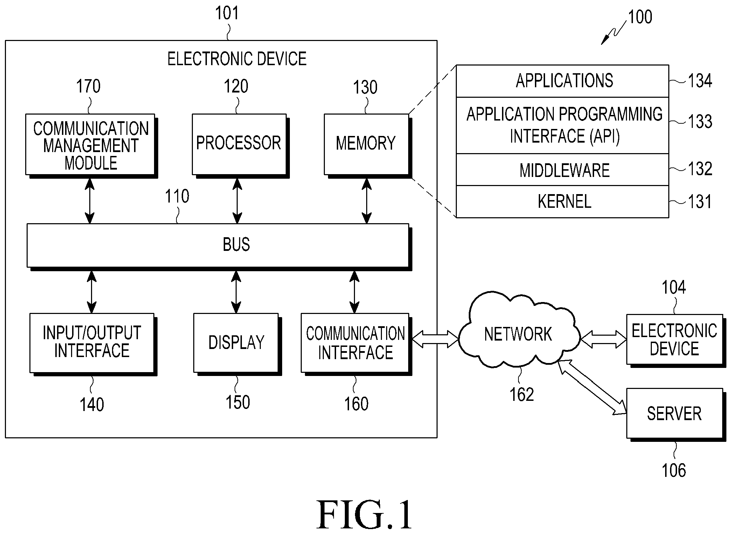

FIG. 1 illustrates a network environment including an electronic device according to various embodiments.

Referring to FIG. 1, the network environment 100 may include an electronic device 101 operating therein. Further, the electronic device 101 may include a bus 110, a processor 120, a memory 130, an input/output interface 140, a display 150, a communication interface 160, and a communication management module 170. The bus 110 may be a circuit connecting the aforementioned elements and transmitting communication (for example, a control message) between the aforementioned elements.

For example, the processor 120 may receive instructions from the aforementioned other elements (for example, the memory 130, the input/output interface 140, the display, the communication interface 160, and the communication management module 170) through the bus 110, decipher the received instructions, and perform calculation or data processing according to the deciphered instructions.

The memory 130 may store instructions or data received from or created by the processor 120 or other elements (for example, the input/output interface 140, the display, the communication interface 160, and the communication management module 170). The memory 130 may include programming modules, for example, a kernel 131, middleware 132, an application programming interface (API) 133, and applications 134. Each of the programming modules described above may be formed of software, firmware, and hardware, or a combination thereof.

The kernel 131 may control or manage system resources (for example, the bus 110, the processor 120, or the memory 130) used for executing an operation or function implemented in the remaining other programming modules, for example, the middleware 132, the API 133, or the applications 134. Also, the kernel 131 may provide an interface capable of accessing and controlling or managing the individual elements of the electronic device 101 using the middleware 132, the API 133, or the application 134.

The middleware 132 may perform a relay function of allowing the API 133 or the applications 134 to exchange data by communicating with the kernel 131. Furthermore, in regard to task requests received from the applications 134, the middleware 132 may perform a control (for example, scheduling or load balancing) for the task requests using, for example, a method of assigning a priority for using the system resources (for example, the bus 110, the processor 120, and the memory 130) of the electronic device 101 to at least one of the applications 134.

The API 133 is an interface through which the applications 134 may control functions provided by the kernel 131 and the middleware 132, and may include at least one interface or function (for example, instruction) for file control, window control, image processing, or text control.

According to various embodiments of the present disclosure, the applications 134 may include a short message service (SMS)/multimedia message service (MMS) application, an e-mail application, a calendar application, an alarm application, a health care application (for example, an application for measuring an amount of exercise or blood sugar), and an environmental information application (for example, an application for providing an atmospheric pressure, humidity, temperature, and the like). Additionally or alternately, the applications 134 may include an application related to an information exchange between the electronic device 101 and an external electronic device (for example, an electronic device 104). The application related to the information exchange may include, for example, a notification relay application for transmitting specific information to the external electronic device, or a device management application for managing the external electronic device.

For example, the notification relay application may include a function of transferring, to the external electronic device (for example, the electronic device 104), notification information generated from other applications of the electronic device 101 (for example, an SMS/MMS application, an e-mail application, a health management application, an environmental information application, and the like). Additionally or alternatively, the notification relay application may receive the notification information from, for example, the external electronic device (for example, the electronic device 104), and may provide the received notification information to a user. The device management application may manage (for example, install, delete, or update), for example, a function for at least a part of the external electronic device (for example, the electronic device 104) communicating with the electronic device 101 (for example, turning on/off the external electronic device itself (or some elements thereof) or adjusting brightness (or resolution) of a display), applications operating in the external electronic device, or services provided from the external electronic device (for example, a telephone call service or a message service).

According to various embodiments, the applications 134 may include an application set on the basis of an attribute (for example, a type) of the external electronic device (for example, the electronic device 104). For example, when the external electronic device is a digital audio player, the applications 134 may include an application related to the reproduction of music. Similarly, when the external electronic device is a mobile medical appliance, the applications 134 may include an application related to health care. According to an embodiment, the applications 134 may include at least one of an application designated to the electronic device 101 and an application received from the external electronic device (for example, a server 106 or the electronic device 104).

The input/output interface 140 may transfer a command or data input by a user through an input/output device (for example, a sensor, a keyboard, or a touch screen) to the processor 120, the memory 130, the communication interface 160, or the communication management module 170 through, for example, the bus 110. For example, the input/output interface 140 may provide, to the processor 120, data for a user's touch that is input through the touch screen. Furthermore, through the input/output device (for example, a speaker or a display), the input/output interface 140 may output instructions or data received from the processor 120, the memory 130, the communication interface 160, or the communication management module 170 through the bus 110. For example, the input/output interface 140 may output voice data processed through the processor 120 to a user through a speaker.

The display 150 may display various pieces of information (for example, multimedia data or text data) to a user.

The communication interface 160 may connect communication between the electronic device 101 and the external electronic device (for example, the electronic device 104 or the server 106). For example, the communication interface 160 may be connected to a network 162 through wireless or wired communication to communicate with the external device. The wireless communication may include at least one of, for example, Wi-Fi, Bluetooth (BT), Near Field Communication (NFC), GPS and cellular communication (for example, Long Term Evolution (LTE), LTE-Advanced (LTE-A), Code Division Multiple Access (CDMA), Wideband CDMA (WCDMA), Universal Mobile Telecommunication System (UMTS), Wireless Broadband (WiBro), Global System for Mobile communication (GSM), and the like the like). The wired communication may include at least one of, for example, a Universal Serial Bus (USB), a High Definition Multimedia Interface (HDMI), Recommended Standard 232 (RS-232), and a Plain Old Telephone Service (POTS).

According to an embodiment, the network 162 may be a telecommunication network. The communication network may include at least one of a computer network, the Internet, the Internet of things, and a telephone network. According to an embodiment, a protocol (for example, a transport layer protocol, data link layer protocol, or a physical layer protocol) for communication between the electronic device 101 and the external device may be supported by at least one of the applications 134, the application programming interface 133, the middleware 132, the kernel 131, and the communication interface 160.

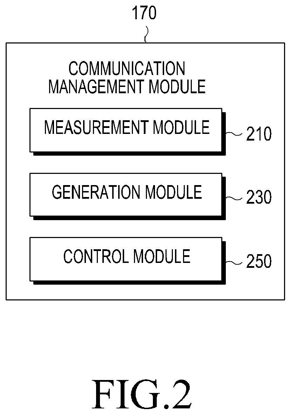

The communication management module 170 may be functionally connected to other components (for example, the processor 120, the memory 130, the input/output interface 140, or the communication interface 160) to acquire conditions of the electronic device (for example, an attachment/detachment of the electronic device to/from the user). Further, the communication management module 170 may independently control a plurality of input/output devices (for example, a sensor, a touch panel, a microphone, a speaker, or a display) through the input/output interface 140 based on the conditions of the electronic device. Hereinafter, additional information on the communication management module 170 will be provided with reference to FIGS. 2 to 6.

FIG. 2 is a block diagram illustrating a communication management module 170 of the electronic device((for example, the electronic device 101) according to various embodiments of the present disclosure.

Referring to FIG. 2, the communication management module 170 may include a measurement module 210, a generation module 230, and a control module 250. According to various embodiments of the present disclosure, when the electronic device is connected to an access point (AP) through WiFi communication, the measurement module 210 may measure a reception strength such as, for example, a received signal strength indicator (RSSI), at every first period. For example, an AP may transmit a beacon signal at every half second interval and the measurement module 210 may measure the beacon signal as a RSSI.

According to various embodiments of the present disclosure, the generation module 230 may detect correction data using a predetermined number of RSSIs that are detected by the measurement module 210. While the measurement module 210 detects an RSSI at every first period, the generation module 230 may calculate an average value using the predetermined number of RSSIs for a second period that is longer than the first period, and may detect and store the calculated average value as correction data. For example, when it is assumed that the first period is approximately 0.5 seconds, the second period may be approximately 3 seconds, and the predetermined number is 6, the generation module 230 may detect 6 RSSIs for 3 seconds, and may detect and store an average value of the 6 detected RSSIs as correction data while the measurement module 210 detects an RSSI at every 0.5 seconds. For example, when the measurement module 210 detects RSSI at every 0.5 seconds as shown in Table 1, the generation module 230 may deem an average value of RSSIs a1 to a6 during first the first six time periods (for 3 seconds) as correction data. Next, when a seventh time period (3.5 seconds) arrives, the generation module 230 may deem an average value of RSSIs a2 to a7 as correction data. Next, when an eighth time period (4 seconds) arrives, the generation module 230 may deem an average value of RSSIs a3 to a8 as correction data. That is, the most recent 3 seconds of data are used as the correction data.

**[Table 1]**

| Time | First period (0.5 seconds) | Second period (1 second) | Third period (1.5 second s) | Fourth period (2 seconds) | Fifth period (2.5 seconds) | Sixth period (3 seconds) | Seventh period (3.5 seconds) | Eighth period (4 seconds) |
|---|---|---|---|---|---|---|---|---|
| RS SI | a1 | a2 | a3 | a4 | a5 | a6 | a7 | a8 |

According to various embodiments of the present disclosure, the control module 250 may release the WiFi communication connection between the electronic device and the AP based on a change in the correction data. The control module 250 may compare a RSSI measured by the measurement module 210 every first period with a first threshold.

According to various embodiments of the present disclosure, the first threshold corresponds to a first condition for releasing the WiFi communication connection between the electronic device and the AP, and the first threshold may be a RSSI that indicates that the electronic device is roaming. For example, when RSSI indicates the electronic device is roaming is approximately -85 decibel milliwatts (dBm), the first threshold may be -80 dBm. When it is determined that the RSSI smaller than the first threshold, the control module 250 may then compare a change in the correction data with a second threshold. That is, the first threshold is a trigger to compare a change in the correct data to be compared with the second threshold.

According to various embodiments of the present disclosure, the second threshold is a second reference condition for releasing the WiFi communication connection between the electronic device and the AP, and may include a RSSI configured according to a movement speed of the electronic device per unit time. In other words, when a movement speed of the electronic device (i.e., movement of the electronic device in any form including in a vehicle such as a bus, car, or subway) is larger than or equal to a reference speed, the second threshold may be an applicable RSSI. The reference speed is for determining a movement speed of the electronic device. When the movement speed of the electronic device is larger than or equal to the reference speed, it may be determined that the electronic device moves fast. When the movement speed of the electronic device is smaller than the reference speed, it may be determined that the electronic device moves slow, for example, while the user is walking. Further, the movement speed of the electronic device per unit time may be detected using RSSIs measured by the electronic device. For example, when the user having the electronic device walks, the movement speed of the electronic device may be about 4 to 5 km/h. When the user having the electronic device or a vehicle (for example, a bus, car, or subway) including the electronic device moves fast and the movement speed of the electronic device is about 100 ms/30s (i.e., about 12 km/h), the reference speed may be 12 km/h. When the reference speed is 12 km/h, the second threshold may be set as -0.8 dBm. When the movement speed of the electronic device is faster than or equal to the reference speed 12 km/h, it may be determined that the electronic device moves fast and the second threshold may be compared with a change in the correction data. However, when the movement speed of the electronic device is slower than the reference speed (i.e., 12 km/h), it may be determined that the electronic device moves slowly and the second threshold may not be compared with the change in the correction data.

According to various embodiments of the present disclosure, when it is determined that the change in the correction data is larger than or equal to the second threshold, the control module 250 may release the WiFi communication between the electronic device and the AP.
According to various embodiments, the communication control apparatus may include a measurement module configured to measure received signal strength indications from a signal transmitted by an access device that the electronic device is connected to, a generation module configured to generate correction data using at least some of the received signal strength indications, and a control module configured to control the communication connection of the electronic device based on a change in the correction data. According to various embodiments of the present disclosure, when the electronic device is connected, the measurement module may measure a received strength indication every first period.
According to various embodiments of the present disclosure, when the electronic device is communication-connected, the measurement module is further configured to measure a received signal strength indication at every first period.

According to various embodiments of the present disclosure, the generation module is further configured to detect an average value of a predetermined number of RSSIs measured for a second period as the correction data.

According to various embodiments of the present disclosure, the control module may is further configured to detect a change in the correction data when the measured RSSI is equal to or smaller than a first threshold, and to release the communication connection of the electronic device when the change in the correction data is larger than or equal to a second threshold.

According to various embodiments of the present disclosure, the first threshold the first threshold includes received signal strength indications equal to or smaller than a received signal strength indication for determining roaming of the electronic device, the second threshold corresponds to a received signal strength indication applied when a movement speed of the electronic device per unit time is faster than or equal to a reference speed.

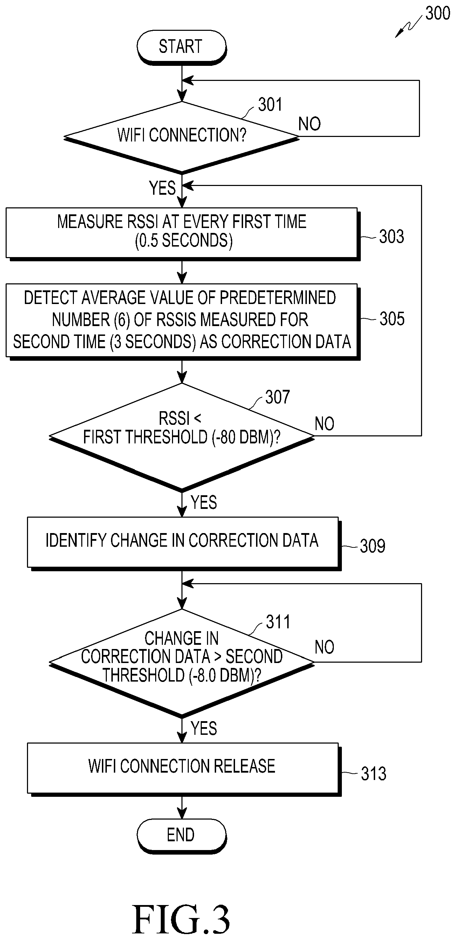

According to various embodiments of the present disclosure, electronic device is connected to the access device via a WiFi connection.FIG. 3 is a flowchart illustrating a process of releasing a communication connection by an electronic device (for example, the electronic device 01) according to various embodiments of the present disclosure.

Referring to FIG. 3, a flowchart 300 illustrates an example of releasing a connection by an electronic device. Specifically, in operation 301, the electronic device (for example, the measurement module 210) may determine that the electronic device is connected to an external device, for example, an AP via a WiFi communication.

In operation 303, the electronic device (for example, the measurement module 210) may measure and store a RSSI using power in a beacon signal that is received from the AP every first period (for example, 0.5 seconds) when the electronic device is connected to the AP via WiFi.

While the electronic device (for example, the generation module 230) measures and stores a RSSI at every first period (for example, 0.5 seconds), the electronic device may calculate an average value of a predetermined number (for example, 6) of RSSI measurements for the second period (for example, 3 seconds) and detect and store the calculated average value as correction data in operation 305.

The electronic device (for example, the control module 250) may compare the RSSI measured every first period with a first threshold in operation 307. When the RSSI is equal to or smaller than the first threshold in operation 307, in operation 309, the electronic device (for example, the control module 250) may compare a change in the correction data with a second threshold, starting from the point when the measured RSSI was equal to or smaller than the first threshold. When the electronic device (for example, the control module 250) determines that a movement speed of the electronic device is faster than or equal to a reference speed, the electronic device may compare the correction data with the second threshold in operation 311.

When the electronic device (for example, the control module 250) determines that the change in the correction data is larger than or equal to the second threshold in operation 311, the electronic device may release the WiFi communication connection between the electronic device and the AP in 313.

According to various embodiments of the present disclosure, the communication control method may include an operation for after connecting to an access device, measuring RSSIs from a signal transmitted by the access device; an operation for generating correction data using the RSSIs; and an operation for controlling an communication connection of the electronic device based on a change in the correction data.

According to various embodiments of the present disclosure, when the electronic device is connected to communicate, the operation for measuring the RSSIs may include an operation for measuring a RSSI at every first period.

According to various embodiments of the present disclosure, the operation for generating of the correction data may include an operation for calculating an average value of a predetermined number of RSSIs that are measured during a second period as the correction data.

According to various embodiments of the present disclosure, the operation for generating of the correction data may further include an operation for comparing the measured RSSI with a first threshold; an operation for detecting a change in the correction data when the measured RSSI is equal to or smaller than the first threshold; an operation for comparing the change in the correction data with a second threshold; and an operation for releasing the communication connection with the access device when the change in the correction data is larger than or equal to the second threshold.

According to various embodiments of the present disclosure, the first threshold may be a RSSI equal to or smaller than a RSSI for determining roaming, and the second threshold may be a RSSI applied when a movement speed of the electronic device per unit time is faster than or equal to a reference speed.

According to various embodiments of the present disclosure, electronic device is connected to the access device via a WiFi connection..

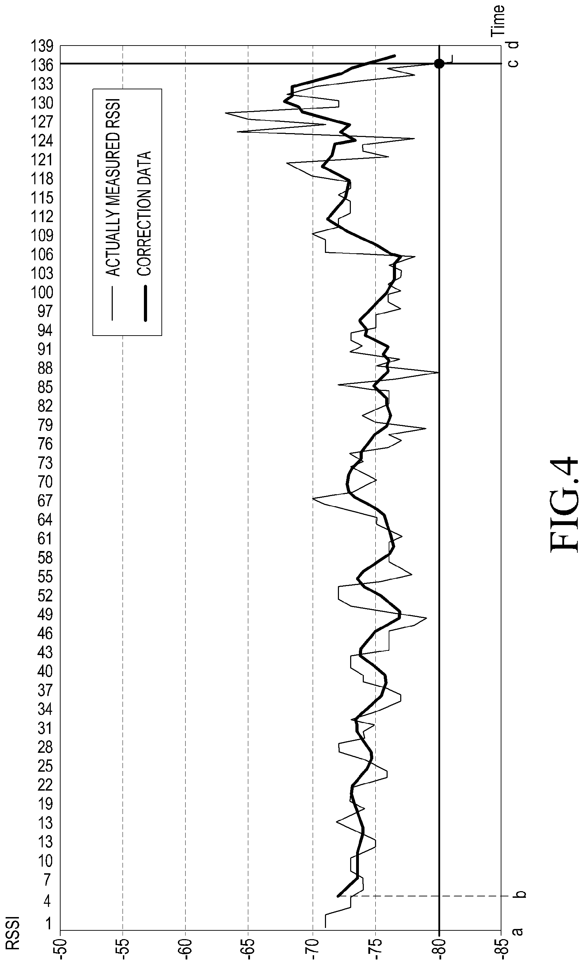

FIG. 4 is a graph describing a process of releasing a communication connection by an electronic device according to various embodiments of the present disclosure. Referring to FIG. 4, a vertical axis of the graph indicates a measured RSSI and a horizontal axis indicates time. In particular, the horizontal axis represents every time interval of 0.5 seconds. The graph of FIG. 4 shows an RSSI and correction data when a movement speed of the electronic device per unit time is faster than or equal to a reference speed. In the graph of FIG. 4, the thin line indicates the measured RSSI and the bolded line indicates the correction data.

According to various embodiments of the present disclosure, the electronic device may measure a RSSI using a beacon signal received from an AP every first period, starting from a time point (a) when the electronic device is connected to an external device. Further, at a second period corresponding to a 3 second position, that is, a time point (b), the electronic device may detect and store an average value of 1 RSSI measured at the time point (b) of the 3 second position and 5 RSSIs measured every 0.5 seconds as correction data. Thereafter, whenever 0.5 seconds elapse, the electronic device may detect and store an average value of 1 RSSI measured after 0.5 seconds pass and 5 RSSI measured before as correction data.

According to various embodiments of the present disclosure, at a time point (c) when the RSSI measured every 0.5 seconds is equal to or smaller than the first threshold of -80 dBm, the electronic device may compare a change in the correction data detected from the time point (c) with a second threshold of -8.0 dBm. At a time point (d) when the change in the correction data detected from the time point (c) is larger than or equal to the second threshold of -8.0 dBm, the electronic device may release the WiFi connection with the AP and then connect to another AP.

Although various embodiments of the present disclosure have described the operation for releasing the WiFi communication connection according to the movement of the electronic device, releasing the WiFi communication connection may be equally performed by the electronic device according to movement of an external device such as, for example, the AP. For example, in a state where the electronic device is connected to the AP through the WiFi communication, when a vehicle (for example, a bus, car, or subway) equipped with the AP moves, the electronic device may determine that a RSSI measured every first period corresponding to 0.5 seconds is equal to or smaller than the first threshold. When it is determined that a change in the correction data is larger than or equal to the second threshold, the electronic device may release the WiFi communication connection with the AP. In a state where the electronic device does not move, the electronic device may detect a movement speed of the AP using a RSSI measured every first period. When the movement speed of the AP is faster than or equal to a reference speed, the electronic device may compare the correction data with the second threshold.

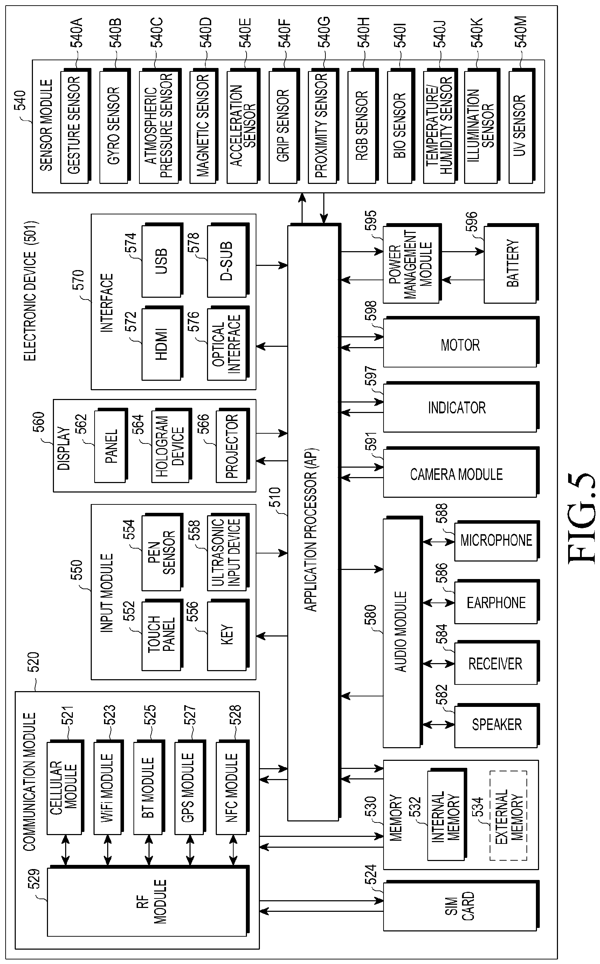

FIG. 5 is a block diagram of an electronic device according to various embodiments of the present disclosure.

Referring to FIG. 5, an electronic device 501 may include at least one Application Processor 510, a communication module 520, a Subscriber Identifier Module (SIM) card 524, a memory 530, a sensor module 540, an input module 550, a display 560, an interface 570, an audio module 580, a camera module 591, a power management module 595, a battery 596, an indicator 597, and a motor 598.

The application processor 510 control a plurality of hardware or software components connected by driving an operating system or an application program and process various data including multimedia data and perform calculations. The application processor 510 may be implemented by, for example, a System on Chip (SoC). According to an embodiment, the application processor 510 may further include a Graphic Processing Unit (GPU).

The communication module 520 (for example, the communication interface 160) may perform data transmission/reception in communication between the electronic device 501 (for example, the electronic device 101) and other electronic devices (for example, the electronic device 104 and the server 106) connected thereto through a network. According to an embodiment, the communication module 520 may include a cellular module 521, a Wi-Fi module 523, a BT module 525, a GPS module 527, an NFC module 528, and a Radio Frequency (RF) module 529.

The cellular module 521 may provide a voice call, a video call, a SMS, or an Internet service through a communication network (for example, LTE, LTE-A, CDMA, WCDMA, UMTS, WiBro, OR GSM). Furthermore, the cellular module 521 may distinguish and authenticate electronic devices within a communication network using, for example, a subscriber identification module (for example, the SIM card 524). According to an embodiment, the cellular module 521 may perform at least some functions which can be provided by the application processor 510. For example, the cellular module 521 may perform at least some of the multimedia control functions.

According to an embodiment, the cellular module 521 may include a Communication Processor (CP). Furthermore, the cellular module 521 may be implemented by, for example, a SoC. Although the elements such as the cellular module 521 (for example, a communication processor), the memory 530, and the power management module 595 are illustrated to be separate from the application processor 510 in FIG. 5, the application processor 510 may include at least some of the aforementioned elements (for example, the cellular module 521) in an embodiment.

According to an embodiment, the application processor 510 or the cellular module 521 (for example, communication processor) may load a command or data received from at least one of a non-volatile memory and other elements connected thereto in a volatile memory, and may process the loaded command or data. Furthermore, the application processor 510 or the cellular module 521 may store data received from or generated by at least one of other elements in a non-volatile memory.

The Wi-Fi module 523, the BT module 525, the GPS module 527, and the NFC module 528 may include, for example, a processor for processing data transmitted/received through the corresponding module. In FIG. 5, the cellular module 521, the WiFi module 523, the BT module 525, the GPS module 527, and the NFC module 528 are illustrated as separate blocks, but at least some (for example, two or more) of the cellular module 521, the WiFi module 523, the BT module 525, the GPS module 527, and the NFC module 528 may be included in one Integrated Chip (IC) or one IC package. For example, at least some (for example, the communication processor corresponding to the cellular module 521 and the Wi-Fi processor corresponding to the Wi-Fi module 523) of the processors corresponding to the cellular module 521, the Wi-Fi module 523, the BT module 525, the GPS module 527, and the NFC module 528 may be implemented by one SoC.

The RF module 529 may transmit/receive data, for example, an RF signal. Although not illustrated, the RF module 529 may include, for example, a transceiver, a Power Amp Module (PAM), a frequency filter, a Low Noise Amplifier (LNA) or the like. Further, the RF module 529 may further include a component for transmitting/receiving electronic waves over a free air space in wireless communication, for example, a conductor, a conducting wire or the like. Although the cellular module 521, the Wi-Fi module 523, the BT module 525, the GPS module 527, and the NFC module 528 share one RF module 729 in FIG. 5, at least one of the cellular module 521, the Wi-Fi module 523, the BT module 525, the GPS module 527, and the NFC module 528 may transmit/receive an RF signal through a separate RF module in one embodiment.

The SIM card 524 may be inserted into a slot formed in a particular portion of the electronic device. The SIM card 524 may include unique identification information (for example, an Integrated Circuit Card IDentifier (ICCID)) or subscriber information (for example, International Mobile Subscriber Identity (IMSI)).

The memory 530 (for example, the memory 130) may include an internal memory 532 or an external memory 534. The internal memory 532 may include, for example, at least one of a volatile memory (for example, a random access memory (RAM), a dynamic RAM (DRAM), a static RAM (SRAM), a synchronous dynamic RAM (SDRAM), and the like), and a non-volatile Memory (for example, a read only memory (ROM), a one time programmable ROM (OTPROM), a programmable ROM (PROM), an erasable and programmable ROM (EPROM), an electrically EPROM (EEPROM), a mask ROM, a flash ROM, a NAND flash memory, an NOR flash memory, and the like).

According to an embodiment, the internal memory 532 may be a solid state drive (SSD). The external memory 534 may further include a flash drive, for example, a compact flash (CF), a secure digital (SD), a micro secure digital (Micro-SD), a mini secure digital (Mini-SD), an extreme digital (xD), a memory stick, or the like. The external memory 534 may be functionally connected with the electronic device 501 through various interfaces. According to an embodiment, the electronic device 501 may further include a storage device (or storage medium) such as a hard drive. The sensor module 540 may measure a physical quantity or detect an operation state of the electronic device 501, and may convert the measured or detected information to an electronic signal. The sensor module 540 may include at least one of, for example, a gesture sensor 540A, a gyro sensor 540B, an atmospheric pressure sensor 540C, a magnetic sensor 540D, an acceleration sensor 540E, a grip sensor 540F, a proximity sensor 540G, a color sensor 540H (for example, red, green, and blue (RGB) sensor), a bio-sensor 5401, a temperature/humidity sensor 540J, an illumination sensor 540K, and a ultraviolet (UV) sensor 540M. Additionally or alternatively, the sensor module 540 may include, for example, an E-nose sensor (not illustrated), an electromyography (EMG) sensor (not illustrated), an electroencephalogram (EEG) sensor (not illustrated), an electrocardiogram (ECG) sensor (not illustrated), an Infrared (IR) sensor, an iris sensor (not illustrated), a fingerprint sensor, and the like. The sensor module 540 may further include a control circuit for controlling one or more sensors included in the sensor module 540.

The input device 550 may include a touch panel 552, a (digital) pen sensor 554, a key 556, or an ultrasonic input device 558. The touch panel 552 may recognize a touch input through at least one of a capacitive type, a resistive type, an infrared type, and an acoustic wave type. The touch panel 552 may further include a control circuit. The capacitive type touch panel may recognize physical contact or proximity. The touch panel 552 may further include a tactile layer. In this case, the touch panel 552 may provide a tactile reaction to the user.

The (digital) pen sensor 554 may be implemented, for example, using a method identical or similar to a method of receiving a touch input of the user, or using a separate recognition sheet. The key 556 may include, for example, a physical button, an optical key, or a keypad. The ultrasonic input device 558 may identify data by detecting an acoustic wave with a microphone (for example, microphone 588) of the electronic device 501 through an input unit generating an ultrasonic signal, and may perform wireless recognition. According to an embodiment, the electronic device 501 may receive a user input from an external device (for example, a computer or server) connected thereto using the communication module 520.

The display 560 (for example, the display 150) may include a panel 562, a hologram device 564, or a projector 566. The panel 562 may be, for example, a Liquid Crystal Display (LCD) or an Active Matrix Organic Light Emitting Diode (AM-OLED). The panel 562 may be implemented to be, for example, flexible, transparent, or wearable. The panel 562 may be configured by one module together with the touch panel 552. The hologram 564 may show a stereoscopic image in the air using interference of light. The projector 566 may project light onto a screen to display an image. The screen may be located, for example, inside or outside the electronic device 501. According to an embodiment, the display 560 may further include a control circuit for controlling the panel 562, the hologram device 564, or the projector 566.

The interface 570 may include, for example, a HDMI 572, a USB 574, an optical interface 576, or a D-subminiature (D-sub) 578. The interface 570 may be included in, for example, the communication interface 160 illustrated in FIG. 1. Additionally or alternatively, the interface 570 may include, for example, a Mobile High-definition Link (MHL) interface, a SD card/Multi-Media Card (MMC) interface, or an Infrared Data Association (IrDA) standard interface.

The audio module 580 may bilaterally convert a sound and an electrical signal. At least some elements of the audio module 580 may be included in, for example, the input/output interface 140 illustrated in FIG. 1. The audio module 580 may process sound information input or output through, for example, the speaker 582, the receiver 584, the earphones 586, the microphone 588 or the like.

The camera module 591 captures a still image or a video, and according to an embodiment, may include one or more image sensors (for example, a front sensor or a rear sensor), a lens (not illustrated), an Image Signal Processor (ISP) (not illustrated), or a flash (not illustrated) (for example, an LED or xenon lamp).

The power management module 595 may manage power of the electronic device 501. Although not illustrated, the power management module 595 may include, for example, a Power Management Integrated Circuit (PMIC), a charger Integrated Circuit (IC), or a battery or fuel gauge.

The PMIC may be mounted to, for example, an integrated circuit or a SoC semiconductor. Charging methods may be classified into a wired charging method and a wireless charging method. The charger IC may charge a battery and prevent over voltage or over current from being flowed from a charger. According to an embodiment, the charger IC may include a charger IC for at least one of the wired charging method and the wireless charging method. A magnetic resonance scheme, a magnetic induction scheme, or an electromagnetic scheme may be exemplified as the wireless charging method, and an additional circuit for wireless charging, such as a coil loop circuit, a resonance circuit, a rectifier circuit, and the like may be added.

The battery gauge may measure, for example, a remaining quantity of the battery 596, or a voltage, a current, or a temperature during the charging. The battery 596 may store or generate electricity, and may supply power to the electronic device 501 using the stored or generated electricity. The battery 596 may include, for example, a rechargeable battery or a solar battery.

The indicator 597 may display a specific status of the electronic device 501 or a part (for example the application processor 510) of electronic device, for example, a booting status, a message status, a charging status, and the like. The motor 598 may convert an electrical signal to a mechanical vibration. Although not illustrated, the electronic device 501 may include a processing unit (for example, GPU) for supporting mobile TV. The processing unit for supporting mobile TV may process media data according to a standard of digital multimedia broadcasting (DMB), digital video broadcasting (DVB), media flow or the like.

The above described components of the electronic device according to various embodiments of the present disclosure may be formed of one or more components, and a name of a corresponding component element may be changed based on the type of electronic device. The electronic device according to the present disclosure may include one or more of the aforementioned components or may further include other additional components, or some of the aforementioned components may be omitted. Further, some of the components of the electronic device according to the various embodiments of the present disclosure may be combined to form a single entity, and thus, may equivalently execute functions of the corresponding elements prior to the combination.

The "module" used in various embodiments of the present disclosure may refer to, for example, a "unit" including one of hardware, software, and firmware, or a combination of two or more of the hardware, software, and firmware. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to various embodiments of the present disclosure may include at least one of an application-specific integrated circuit (ASIC) chip, a field-programmable gate arrays (FPGAs), and a programmable-logic device for performing operations which have been known or are to be developed hereafter. According to various embodiments, at least part of a device (for example, modules or functions thereof) or a method (for example, operations) according to the various embodiments of the present disclosure may be embodied by, for example, an instruction stored in a non-transitory computer readable storage medium provided in a form of a programming module. When the command is executed by one or more processors (for example, the processor 120), the one or more processors may execute a function corresponding to the command. The non-transitory computer-readable storage medium may be, for example, the memory 130. At least a part of the programming module may be implemented (for example, executed) by, for example, the processor 120. At least a part of the programming module may include, for example, a module, a program, a routine, a set of instructions and/or a process for performing one or more functions.

The non-transitory computer-readable recording medium may include magnetic media such as a hard disk, a floppy disk, and a magnetic tape, optical media such as a compact disc read only memory (CD-ROM) and a DVD, magneto-optical media such as a floptical disk, and hardware devices specially configured to store and perform a program instruction (for example, programming module), such as a ROM, a RAM, a flash memory and the like. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or a programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

According to various embodiments of the present disclosure, commands stored in a storage medium, when executed by at least one processor, cause the at least one processor to perform at least one operation, which may include an operation of receiving a biosignal (e.g., pulse wave signal) in an electronic device (e.g., the electronic device 101), an operation of checking if the user of the electronic device wears the electronic device, based on at least the biosignal, and an operation of independently controlling (e.g., turning on/off) a plurality of input/output (IO) units (e.g., a display, a speaker, and a microphone) functionally connected to the electronic device respectively, based on whether the user wear the electronic device or not.

While the present disclosure has been shown and described with reference to various embodiments thereof, it will be understood by those skilled in the art that various changes in form and details may be made therein without departing from the scope of the appended claims.

## Claims

1. An electronic device comprising:
a measurement module (210) configured to measure (303) received signal strength indications from a signal transmitted by an access device that the electronic device is connected to (301);
a generation module (230) configured to generate (305) correction data by calculating an average of at least some of the received signal strength indications; and
a control module (250) configured to release the communication connection of the electronic device based on a change (309,311) in the correction data, wherein the control module is further configured to
detect (309) the change in the correction data when the measured received signal strength indication is equal to or smaller than a first threshold (307); and
to release (313) the communication connection of the electronic device when the change (311) in the correction data is larger than or equal to a second threshold.

2. The electronic device of claim 1, wherein, when the electronic device is communication-connected, the measurement module is further configured to measure (303) a received signal strength indication at every first period.

3. The electronic device of claim 1, wherein the generation module is further configured to detect (305) an average value of a predetermined number of received signal strength indications measured for a second period as the correction data.

4. The electronic device of claim 1, wherein the first threshold corresponds to a received signal strength indication for determining roaming of the electronic device.

5. The electronic device of claim 1, wherein the second threshold corresponds to a received signal strength indication applied when a movement speed of the electronic device per unit time is faster than or equal to a reference speed.

6. The electronic device of claim 1, wherein the electronic device is connected to the access device via a WiFi connection (301).

7. A method comprising:
after connecting (301) to an access device, measuring (303) received signal strength indications from a signal transmitted by the access device;
generating (305) correction data by calculating an average of the received signal strength indications; and
releasing (313) the communication connection of an electronic device based on a change (309,311) in the correction data, wherein the method further comprises
comparing (307) the measured received signal strength indication with a first threshold;
detecting (309) the change in the correction data when the measured received signal strength indication is equal to or smaller than the first threshold (307);
comparing (311) the change in the correction data with a second threshold; and
releasing (313) the communication connection of an electronic device with the access device when the change in the correction data is larger than or equal to the second threshold.

8. The method of claim 7, wherein the measuring of the received signal strength indications comprises measuring a received signal strength indication at every first period.

9. The method of claim 7, wherein the generating of the correction data comprises:
calculating an average value of a predetermined number of received signal strength indications that are measured during a second period as the correction data.

10. The method of claim 7, wherein the first threshold corresponds to a received signal strength indication for determining roaming.

11. The method of claim 7, wherein the second threshold corresponds to a received signal strength indication applied when a movement speed of the electronic device per unit time is faster than or equal to a reference speed.

12. The method of claim 7, wherein the electronic device is connected to the access device via a WiFi connection.

13. A non-transitory computer readable recording medium having recorded thereon a computer program for executing in a computer the method of claim 7.

## Patentansprüche

1. Elektronische Vorrichtung mit:
einem Messmodul (210), das eingerichtet ist, Signalempfangsstärkeanzeichen von einem Signal zu messen (303), das durch eine Zugriffsvorrichtung übertragen wurde, an das die elektronische Vorrichtung angeschlossen (301) ist,
einem Erzeugungsmodul (230), das eingerichtet ist, Korrekturdaten zu erzeugen (305), indem ein Mittelwert von zumindest einigen der Signalempfangsstärkeanzeichen berechnet wird, und
einem Steuermodul (250), das eingerichtet ist, die Kommunikationsverbindung der elektronischen Vorrichtung auf Basis einer Veränderung (309, 311) in den Korrekturdaten freizugeben, wobei das Steuermodul ferner eingerichtet ist zum:
Ermitteln (309) der Veränderung in den Korrekturdaten, wenn das gemessene Signalempfangsstärkeanzeichen gleich oder kleiner als ein erster Schwellenwert (307) ist, und
Freigeben (313) der Kommunikationsverbindung der elektronischen Vorrichtung, wenn die Veränderung (311) in den Korrekturdaten gleich oder größer als ein zweiter Schwellenwert ist.

2. Elektronische Vorrichtung nach Anspruch 1, wobei das Messmodul ferner eingerichtet ist, ein Signalempfangsstärkeanzeichen in jeder ersten Periode zu messen (303), wenn die elektronische Vorrichtung in einer Kommunikationsverbindung ist.

3. Elektronische Vorrichtung nach Anspruch 1, wobei das Erzeugungsmodul ferner eingerichtet ist, einen Mittelwert einer vorgegebenen Zahl von Signalempfangsstärkeanzeichen, die für eine zweite Periode gemessen wurden, als die Korrekturdaten zu ermitteln (305).

4. Elektronische Vorrichtung nach Anspruch 1, wobei der erste Schwellenwert zu einem Signalempfangsstärkeanzeichen für die Bestimmung eines Roaming der elektronischen Vorrichtung gehört.

5. Elektronische Vorrichtung nach Anspruch 1, wobei der zweite Schwellenwert zu einem Signalempfangsstärkeanzeichen gehört, das angewendet wird, wenn eine Bewegungsgeschwindigkeit der elektronischen Vorrichtung pro Zeiteinheit schneller als eine oder gleich einer Bezugsgeschwindigkeit ist.

6. Elektronische Vorrichtung nach Anspruch 1, wobei die elektronische Vorrichtung über eine WiFi-Verbindung (301) an die Zugriffsvorrichtung angeschlossen ist.

7. Verfahren, umfassend:
Messen (303) von Signalempfangsstärkeanzeichen aus einem Signal, das durch eine Zugriffsvorrichtung übertragen wurde, nach dem Anschließen (301) an eine Zugriffsvorrichtung,
Erzeugen (305) von Korrekturdaten durch Berechnen eines Mittelwerts der Signalempfangsstärkeanzeichen und
Freigeben (313) der Kommunikationsverbindung einer elektronischen Vorrichtung auf Basis einer Veränderung (309, 311) in den Korrekturdaten, wobei das Verfahren ferner umfasst:
Vergleichen (307) des gemessenen Signalempfangsstärkeanzeichens mit einem ersten Schwellenwert,
Ermitteln (309) der Veränderung in den Korrekturdaten, wenn das gemessene Signalempfangsstärkeanzeichen gleich oder kleiner als ein erster Schwellenwert (307) ist,
Vergleichen (311) der Veränderung in den Korrekturdatenmit einem zweiten Schwellenwert und
Freigeben (313) der Kommunikationsverbindung einer elektronischen Vorrichtung mit der Zugriffsvorrichtung, wenn die Veränderung in den Korrekturdaten gleich oder größer als der zweite Schwellenwert ist.

8. Verfahren nach Anspruch 7, wobei das Messen der Signalempfangsstärkeanzeichen ein Messen eines Signalempfangsstärkeanzeichens in jeder ersten Periode umfasst.

9. Verfahren nach Anspruch 7, wobei das Erzeugen der Korrekturdaten umfasst:
Berechnen eines Mittelwerts einer vorgegebenen Zahl von Signalempfangsstärkeanzeichen, die während einer zweiten Periode gemessen wurden, als die Korrekturdaten.

10. Verfahren nach Anspruch 7, wobei der erste Schwellenwert zu einem Signalempfangsstärkeanzeichen für die Bestimmung eines Roaming gehört.

11. Verfahren nach Anspruch 7, wobei der zweite Schwellenwert zu einem Signalempfangsstärkeanzeichen gehört, das angewendet wird, wenn eine Bewegungsgeschwindigkeit der elektronischen Vorrichtung pro Zeiteinheit schneller als eine oder gleich einer Bezugsgeschwindigkeit ist.

12. Verfahren nach Anspruch 7, wobei die elektronische Vorrichtung über eine WiFi-Verbindung an die Zugriffsvorrichtung angeschlossen ist.

13. Nichtflüchtiges computerlesbares Aufzeichnungsmedium, welches darauf aufgezeichnet ein Computerprogramm für die Ausführung in einem Computer des Verfahrens von Anspruch 7 aufweist.

## Revendications

1. Dispositif électronique comprenant :
un module de mesure (210) configuré pour mesurer (303) des indications de force de signal reçu à partir d'un signal transmis par un dispositif d'accès auquel le dispositif électronique est connecté (301) ;
un module de génération (230) configuré pour générer (305) des données de correction par le calcul d'une moyenne d'au moins certaines des indications de force de signal reçu ; et
un module de commande (250) configuré pour libérer la connexion de communication du dispositif électronique sur la base d'un changement (309, 311) des données de correction, dans lequel le module de commande est en outre configuré pour
détecter (309) le changement des données de correction lorsque l'indication de force de signal reçu mesurée est inférieure ou égale à un premier seuil (307) ; et
libérer (313) la connexion de communication du dispositif électronique lorsque le changement (311) des données de correction est supérieur ou égal à un deuxième seuil.

2. Dispositif électronique selon la revendication 1, dans lequel, lorsque le dispositif électronique est connecté pour une communication, le module de mesure est en outre configuré pour mesurer (303) une indication de force de signal reçu à chaque première période.

3. Dispositif électronique selon la revendication 1, dans lequel le module de génération est en outre configuré pour détecter (305) une valeur moyenne d'un nombre prédéterminé d'indications de force de signal reçu mesurées pour une deuxième période en tant que les données de correction.

4. Dispositif électronique selon la revendication 1, dans lequel le premier seuil correspond à une indication de force de signal reçu pour déterminer une itinérance du dispositif électronique.

5. Dispositif électronique selon la revendication 1, dans lequel le deuxième seuil correspond à une indication de force de signal reçu appliquée lorsqu'une vitesse de mouvement du dispositif électronique par unité de temps est supérieure ou égale à une vitesse de référence.

6. Dispositif électronique selon la revendication 1, dans lequel le dispositif électronique est connecté au dispositif d'accès par l'intermédiaire d'une connexion WiFi (301).

7. Procédé comprenant :
après la connexion (301) à un dispositif d'accès, la mesure (303) d'indications de force de signal reçu à partir d'un signal transmis par le dispositif d'accès ;
la génération (305) de données de correction par le calcul d'une moyenne des indications de force de signal reçu ; et
la libération (313) de la connexion de communication d'un dispositif électronique sur la base d'un changement (309, 311) des données de correction, dans lequel le procédé comprend en outre :
la comparaison (307) de l'indication de force de signal reçu mesurée à un premier seuil ;
la détection (309) du changement des données de correction lorsque l'indication de force de signal reçu mesurée est inférieure ou égale au premier seuil (307) ;
la comparaison (311) du changement des données de correction à un deuxième seuil ; et
la libération (313) de la connexion de communication d'un dispositif électronique au dispositif d'accès lorsque le changement des données de correction est supérieur ou égal au deuxième seuil.

8. Procédé selon la revendication 7, dans lequel la mesure des indications de force de signal reçu comprend la mesure d'une indication de force de signal reçu à chaque première période.

9. Procédé selon la revendication 7, dans lequel la génération des données de correction comprend :
le calcul d'une valeur moyenne d'un nombre prédéterminé d'indications de force de signal reçu qui sont mesurées au cours d'une deuxième période en tant que les données de correction.

10. Procédé selon la revendication 7, dans lequel le premier seuil correspond à une indication de force de signal reçu pour déterminer une itinérance.

11. Procédé selon la revendication 7, dans lequel le deuxième seuil correspond à une indication de force de signal reçu appliquée lorsqu'une vitesse de mouvement du dispositif électronique par unité de temps est supérieure ou égale à une vitesse de référence.

12. Procédé selon la revendication 7, dans lequel le dispositif électronique est connecté au dispositif d'accès par l'intermédiaire d'une connexion WiFi.

13. Support d'enregistrement lisible par ordinateur non transitoire sur lequel est enregistré un programme informatique pour exécuter, dans un ordinateur, le procédé de la revendication 7.
